# EUROPEAN PATENT APPLICATION

(11) **EP 2 902 820 A1**
(43) Date of publication of application: **05.08.2015**
(21) Application number: 13841478.4
(22) Date of filing: 27.09.2013
(51) Int. Cl.: G02B 5/08, B32B 15/08, B32B 15/095, F24J 2/10

(54) **FILM MIRROR AND COMPOSITE FILM USING SAME**

(30) Priority: 28.09.2012 JP 2012216241; 18.02.2013 JP 2013029202
(71) Applicant: FUJIFILM Corporation, Tokyo 106-8620 (JP)
(72) Inventor: AGATA Yuya, Ashigara-kami-gun Kanagawa 258-8577 (JP); YAMAMOTO Yuya, Ashigara-kami-gun Kanagawa 258-8577 (JP)
(74) Representative: Hoffmann Eitle
(86) International application number: PCT/JP2013/076278
(87) International publication number: WO 2014/051058

(57) **Abstract**

The objective of the present invention is to provide a film mirror having excellent damage resistance and a consistently high haze value and reflectivity, as well as a composite film used therein. This film mirror has a resin substrate, a metal reflective layer, and a surface coating layer, wherein the hardness of the surface coating layer is no greater than 100 N/mm², and the elastic recovery rate is at least 60%.

## Description

### TECHNICAL FIELD

The present invention relates to a film mirror that may be suitably used to concentrate sunlight and a composite film for use therein.

### BACKGROUND ART

Sunlight reflectors are exposed to ultraviolet light and heat from sunlight, weather, sandy dust and the like, and therefore glass mirrors have conventionally been used therefor.

When using such glass mirrors, however, there have been a problem of breakage during transportation and a problem of increased construction cost because of high strength required for mounts on which the mirrors are to be mounted.

In order to solve such problems, it has been proposed in recent years to replace glass mirrors by reflective resin sheets (film mirrors).

For example, Patent Literature 1 describes a film mirror comprising a resin substrate, and at least a silver reflective layer and a protective layer on the resin substrate ([Claim 1], [0027]), and also describes that the binder (resin) for use in the protective layer is preferably a polyester resin or an acrylic resin and more preferably a thermosetting resin obtained by further mixing a curing agent such as an isocyanate thereinto ([0038], [0039]).

### CITATION LIST

### PATENT LITERATURE

Patent Literature 1: JP 2011-158752 A

### SUMMARY OF INVENTION

### TECHNICAL PROBLEMS

The inventors of the present invention have made a study on the film mirror described in Patent Literature 1 and it turned out that the film mirror is inferior in scratch resistance depending on the material used to form the protective layer, thus leading to reduction of the haze value and the reflectance.

Accordingly, the present invention aims at providing a film mirror which is excellent in scratch resistance and of which the haze value and the reflectance are kept at high rates, and a composite film for use therein.

### [Solution to Problems]

The inventors of the present invention have made an intensive study to achieve the foregoing object and as a result found that the scratch resistance is improved while keeping the haze value at a higher rate by forming a surface coating layer of which the hardness and the elastic recovery rate fall within specific ranges. The present invention has been thus completed.

Specifically, the invention provides the following (1) to (13).

(1) A film mirror comprising: a resin substrate; a metal reflective layer; and a surface coating layer,
   wherein the surface coating layer has a hardness of up to 100 N/mm² and an elastic recovery rate of 60% or more.
(2) The film mirror according to (1), wherein a resin making up the surface coating layer is a urethane bond-containing resin.
(3) The film mirror according to (2), wherein the urethane bond-containing resin is a urethane (meth)acrylate resin.
(4) The film mirror according to (3), wherein the urethane (meth)acrylate resin is a hydroxyl group-containing acrylic resin / isocyanate polymer.

(5) A film mirror comprising: a first resin substrate; a metal reflective layer; a second resin substrate; and a surface coating layer,
   wherein the surface coating layer has a hardness of up to 100 N/mm² and an elastic recovery rate of 60% or more.
(6) The film mirror according to (5), wherein a resin making up the surface coating layer is a urethane bond-containing resin.
(7) The film mirror according to (6), wherein the urethane bond-containing resin is a urethane (meth)acrylate resin.
(8) The film mirror according to (7), wherein the urethane (meth)acrylate resin is a hydroxyl group-containing acrylic resin / isocyanate polymer.

(9) The film mirror according to any of (1) to (8) for use in concentration of sunlight.

(10) A composite film comprising: a resin substrate and a surface coating layer,
   wherein the surface coating layer has a hardness of up to 100 N/mm² and an elastic recovery rate of 60% or more.
(11) The composite film according to (10), wherein a resin making up the surface coating layer is a urethane bond-containing resin.
(12) The composite film according to (11), wherein the urethane bond-containing resin is a urethane (meth)acrylate resin.
(13) The composite film according to (12), wherein the urethane (meth)acrylate resin is a hydroxyl group-containing acrylic resin / isocyanate polymer.

### ADVANTAGEOUS EFFECTS OF INVENTION

As will be described below, the present invention can provide a film mirror which is excellent in scratch resistance and of which the haze value and the reflectance are kept at high rates, and a composite film for use therein.

In addition, the film mirror of the invention can be suitably used particularly as a film mirror for concentration of sunlight which is exposed to sandy dust and the like for a long period of time because the haze ratio and the reflectance are kept at high rates and the durability is also excellent.

### BRIEF DESCRIPTION OF DRAWINGS

[FIG. 1] FIG. 1 is a cross-sectional view schematically showing an example embodying a film mirror according to a first embodiment of the invention (first embodiment).
[FIG. 2] FIG. 2 is a cross-sectional view schematically showing another example embodying the film mirror according to the first embodiment of the invention (first embodiment).
[FIG. 3] FIG. 3 is a cross-sectional view schematically showing still another example embodying the film mirror according to the first embodiment of the invention (first embodiment).
[FIG. 4] FIG. 4 is a cross-sectional view schematically showing yet another example embodying the film mirror according to the first embodiment of the invention (first embodiment).
[FIG. 5] FIG. 5 is a cross-sectional view schematically showing another example embodying a film mirror according to a second embodiment of the invention (second embodiment).
[FIG. 6] FIG. 6 is a cross-sectional view schematically showing another example embodying the film mirror according to the second embodiment of the invention (second embodiment).
[FIG. 7] FIG. 7 is a cross-sectional view schematically showing still another example embodying the film mirror according to the second embodiment of the invention (second embodiment).
[FIG. 8] FIG. 8 is a cross-sectional view schematically showing yet another example embodying the film mirror according to the second embodiment of the invention (second embodiment).

### DESCRIPTION OF EMBODIMENTS

### [Film mirror]

### [First embodiment]

A film mirror according to a first embodiment of the invention is a film mirror including a resin substrate, a metal reflective layer and a surface coating layer, wherein the surface coating layer has a hardness of up to 100 N/mm² and an elastic recovery rate of 60% or more.

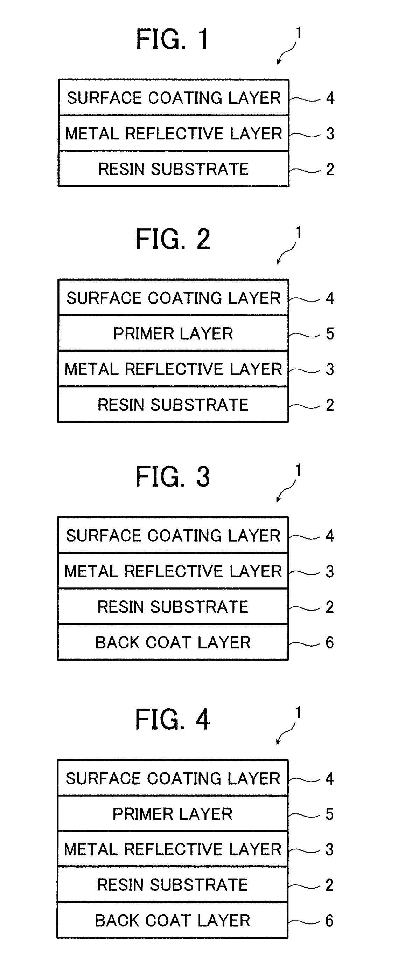

Next, the outline of the film mirror according to the first embodiment of the invention is described with reference to FIGS. 1 to 4.

As shown in FIGS. 1 to 4, a film mirror 1 of the invention includes a resin substrate 2, a metal reflective layer 3 and a surface coating layer 4.

Furthermore, as shown in FIGS. 2 and 4, the film mirror 1 of the invention preferably includes a primer layer 5 formed between the metal reflective layer 3 and the surface coating layer 4 for the reason that the adhesion between the metal reflective layer 3 and the surface coating layer 4 is improved. In the practice of the invention, the position at which the primer layer is to be formed is not limited to the position shown in these drawings but the primer layer may be appropriately formed between any layers in terms of adhesion.

Furthermore, as shown in FIGS. 3 and 4, the film mirror 1 of the invention preferably includes a back coat layer 6 formed on a surface of the resin substrate 2 on the side opposite to the side on which the metal reflective layer 3 is formed, for the reason that curling of the film mirror can be adjusted.

### [Second embodiment]

A film mirror according to a second embodiment of the invention is a film mirror including a first resin substrate, a metal reflective layer, a second resin substrate and a surface coating layer, wherein the surface coating layer has a hardness of up to 100 N/mm² and an elastic recovery rate of 60% or more.

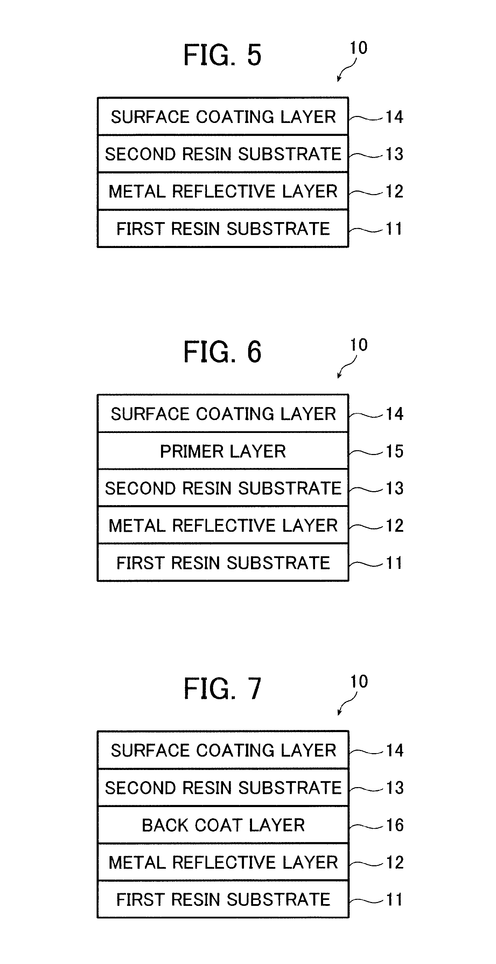

Next, the outline of the film mirror according to the second embodiment of the invention is described with reference to FIGS. 5 to 8.

As shown in FIGS. 5 to 8, a film mirror 10 of the invention includes a first resin substrate 11, a metal reflective layer 12, a second resin substrate 13 and a surface coating layer 14.

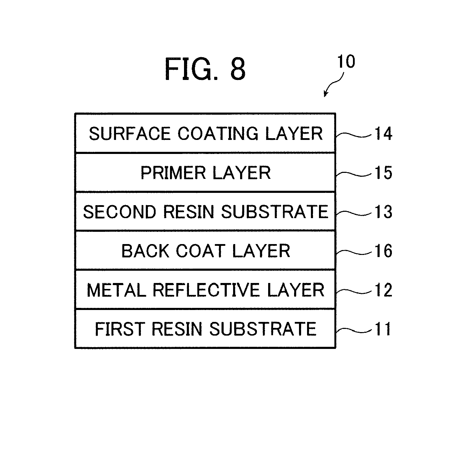

Furthermore, as shown in FIGS. 6 and 8, the film mirror 10 of the invention preferably includes a primer layer 15 formed between the second resin substrate 13 and the surface coating layer 14 for the reason that the adhesion between the second resin substrate 13 and the surface coating layer 14 is improved. In the practice of the invention, the position at which the primer layer is to be formed is not limited to the position shown in these drawings but the primer layer may be appropriately formed between any layers in terms of adhesion.

Furthermore, as shown in FIGS. 7 and 8, the film mirror 10 of the invention preferably includes a back coat layer 16 formed on a surface of the second resin substrate 13 on the side opposite to the side on which the surface coating layer 14 is formed, for the reason that curling of the film mirror can be adjusted.

Next, the materials, the dimensions and the like of the respective elements making up the film mirrors according to the first and second embodiments of the invention (these film mirrors are hereinafter collectively referred to also as "film mirrors of the invention") are described.

### <Resin substrate>

The resin substrate for use in the first embodiment, and the first and second resin substrates for use in the second embodiment (these substrates are hereinafter collectively referred to also as "resin substrates" if they do not need to be distinguished from each other) are not particularly limited and exemplary materials to form them include polyolefin resins such as polyethylene and polypropylene; polyester resins such as polyethylene terephthalate and polyethylene naphthalate; polycarbonate resins; acrylic resins such as polymethyl methacrylate; polyamide resins; polyimide resins; polyvinyl chloride resins; polyphenylene sulfide resins; polyether sulfone resins; polyethylene sulfide resins; polyphenylene ether resins; styrene resins; and cellulose resins such as cellulose acetate. A single material or different materials may be used to form the first and second resin substrates for use in the second embodiment.

Among these, acrylic resins are preferred for the resin substrates (particularly for the second resin substrate in the second embodiment) because of high transparency and weather resistance of the film mirror.

According to the invention, the shape of the resin substrates is not particularly limited. The resin substrates may have any of a planar surface, a diffusing surface, a concave surface and a convex surface, for example.

Likewise, the thickness of the resin substrates is not particularly limited because it also depends on the shape of the resin substrates. In general, however, the resin substrates preferably have a thickness of 25 to 200 µm when having a planar shape. In the second embodiment, the thickness of the second resin substrate is preferably up to around half the thickness of the first resin substrate in terms of the transparency and smoothness of the film mirror.

### <Metal reflective layer>

Each of the metal reflective layers for use in the first and second embodiments (these layers are hereinafter collectively referred to also as "metal reflective layers" if they do not need to be distinguished from each other) is a layer formed on a surface of the resin substrate (the first resin substrate in the second embodiment).

The material used to form the metal reflective layers is not particularly limited as long as it is a metallic material which may reflect visible light and infrared light. Specific examples thereof include silver and aluminum.

In a case where the foregoing materials such as silver and aluminum are used, other metals (e.g., gold, copper, nickel, iron, and palladium) may be incorporated in such amounts that there is no adverse effect on the reflection characteristics.

According to the invention, the thickness of the metal reflective layers is not particularly limited and is preferably 50 to 500 nm and more preferably 100 to 300 nm in terms of reflectance and the like.

According to the invention, the method of forming the metal reflective layers is not particularly limited and any of a wet process and a dry process may be applied.

An example of the wet process includes a process which is known as a so-called metal plating process.

Examples of the dry process include a vacuum deposition process, a sputtering process and an ion plating process.

### <Surface coating layer>

Each of the surface coating layers for use in the first and second embodiments (these layers are hereinafter collectively referred to also as "surface coating layers" if they do not need to be distinguished from each other) is a layer having a hardness of up to 100 N/mm² and an elastic recovery rate of 60% or more.

The hardness of the surface coating layers as used herein (hereinafter referred to also as "surface hardness") refers to the Martens hardness as measured at a maximum load of 1 mN (a load applied over 10 seconds is called maximum load) by a nanoindentation process according to ISO 14577-1 (instrumented indentation hardness).

Measurement can be made using, for example, an ultra-microhardness tester (DUH-201S manufactured by Shimadzu Corporation).

The elastic recovery rate of the surface coating layers is measured at a maximum load of 1 mN (a load applied over 10 seconds is called maximum load) by the nanoindentation process according to ISO 14577-1 (instrumented indentation hardness). To be more specific, the elastic recovery rate is obtained by measuring the "maximum indentation depth (hmax)" and the "indentation depth after load removal (hf)" and calculating (hmax - hf) / (hmax).

The maximum indentation depth (hmax) is an indentation depth when the maximum load is held.

The indentation depth after load removal (hf) is an indentation depth (depth of indentation) after 10 seconds from the complete load removal.

Measurement can be made using, for example, an ultra-microhardness tester (DUH-201S manufactured by Shimadzu Corporation).

The film mirror of the invention has the surface coating layer which has such characteristics and is therefore excellent in scratch resistance while also keeping the haze value and the reflectance at higher rates.

Although this is not clarified in detail, the inventors of the invention presume as follows:

That is, this is presumably because the surface coating layer having a hardness of up to 100 N/m² improves the resistance to impact of sandy dust and the like, and the surface coating layer having an elastic recovery rate of 60% or more enables self-repairing of scratches in minute areas caused by sandy dust and the like.

According to the invention, the surface coating layers preferably have a hardness of 1 to 70 N/mm² and more preferably 1 to 50 N/mm² because the scratch resistance of the film mirror is improved, and the haze value and the reflectance are kept at higher rates.

The surface coating layers also preferably have an elastic recovery rate of more than 62.0%, more preferably 70 to 100% and even more preferably 80 to 100% for the same reasons.

According to the invention, the thickness of the surface coating layers is not particularly limited and is preferably 1 to 50 µm and more preferably 3 to 30 µm because the scratch resistance of the film mirror is improved, and the haze value and the reflectance are kept at higher rates.

The material used to form the surface coating layers is not particularly limited as long as the surface coating layers have a hardness of up to 100 N/mm² and an elastic recovery rate of 60% or more.

Specific examples of the formation material include photocurable resins such as urethane (meth)acrylate resin, polyester (meth)acrylate resin, silicone (meth)acrylate resin, and epoxy (meth)acrylate resin; and thermosetting resins such as urethane resin, phenolic resin, urea resin, phenoxy resin, silicone resin, polyimide resin, diallyl phthalate resin, furan resin, bismaleimide resin and cyanate resin. These may be used alone or in combination of two or more.

The expression "(meth)acrylate" in the photocurable resins is an expression referring to acrylate or methacrylate.

Among these, a resin having a urethane bond is preferable. To be more specific, use of a photocurable resin is more preferable. Urethane (meth)acrylate resin is even more preferable because the hardness of the film mirror is easily adjusted.

Suitable examples of the urethane (meth)acrylate resin include a product obtained by reacting a polyester polyol (A) with a polyisocyanate (B) to synthesize an isocyanate group-terminated urethane prepolymer and then reacting the resulting urethane prepolymer with a hydroxyl group-containing (meth)acrylate compound (C); and a polymer of a hydroxyl group-containing acrylic resin and an isocyanate.

The polyester polyol (A) is obtained by reacting a polybasic acid with a polyol and specific examples thereof include polytetramethylene glycol (PTMG), polyoxypropylene diol (PPG) and polyoxyethylene diol.

The polyisocyanate (B) is not particularly limited as long as it has two or more isocyanate groups in the molecule. Specific examples thereof include 2,4-tolylene diisocyanate (TDI), diphenylmethane diisocyanate (MDI), hexamethylene diisocyanate (HDI), isophorone diisocyanate (IPDI) and xylylene diisocyanate (XDI).

Specific examples of the hydroxyl group-containing (meth)acrylate compound (C) include 2-hydroxyethyl (meth)acrylate, 2-hydroxypropyl (meth)acrylate, 4-hydroxybutyl (meth)acrylate, glycidol di(meth)acrylate and pentaerythritol triacrylate.

A commercial product may be used for the urethane (meth)acrylate resin synthesized using the above-described polyester polyol (A), polyisocyanate (B) and hydroxyl group-containing (meth)acrylate compound (C). To be more specific, ultraviolet curable urethane acrylate resins such as UV1700B, UV6300B and UV7600B manufactured by The Nippon Synthetic Chemical Industry Co., Ltd. can be used.

On the other hand, the polymer of a hydroxyl group-containing acrylic resin and an isocyanate can be prepared by the method described in [Claim 2], [Claim 3] and [0142] through [0148] of JP 2012-25821 A.

In the practice of the invention, each surface coating layer preferably contains fluorine atoms for the reasons such as the stain-proof properties of its surface, and reduction of the coefficient of friction (ease of sliding).

Fluorine atoms can be contained, for example, by a method in which a fluorine-containing acrylate monomer is used in combination with the above-described hydroxyl group-containing (meth)acrylate compound (C) or fluorination described in paragraph [0124] and the like of JP 2011-158751 A.

In the practice of the invention, the method of forming the surface coating layers is not particularly limited, and an exemplary method includes a method which involves applying a curable composition containing any of the above-described photocurable resins and thermosetting resins (composition for forming the surface coating layers) onto a surface of the metal reflective layer (or the primer layer to be described later) and then photo-curing under exposure to ultraviolet radiation or heat-curing under heating.

Conventionally known coating methods such as gravure coating, reverse coating, die coating, blade coating, roll coating, air knife coating, screen coating, bar coating and curtain coating can be used to apply the curable composition.

In addition to the above-described ingredients, the curable composition may contain a solvent and various additives.

Examples of the solvent that may be used include solvents such as hydrocarbons, hydrogen halides, ethers, esters and ketones. To be more specific, xylene and dibutyl ether can be suitably used.

Examples of the additives include a photopolymerization initiator, an antistatic agent, a leveling agent, an ultraviolet absorber, a light stabilizer, an antioxidant, an antifoaming agent, a thickener, an antisettling agent, a pigment, a dispersant, and a silane coupling agent.

### [Preferred embodiment of surface coating layer]

A preferred embodiment of the surface coating layer is, for example, a polyrotaxane-containing layer.

### <Polyrotaxane>

Polyrotaxane is a molecular composite in which block groups are disposed at both ends of pseudorotaxane (at both ends of a straight-chain molecule) in order to prevent dissociation of cyclic molecules, the pseudorotaxane including the straight-chain molecule inside the cyclic molecules so that the straight-chain molecule is threaded through opening of the cyclic molecules in a skewer shape.

Polyrotaxane as used in the present application refers to a concept including not only the above-described molecular complexes but also cross-linked forms in which the molecular complexes are cross-linked to each other at cyclic molecule moieties and polymers obtained by polymerizing the molecular complexes with other monomers or polymers.

### (Straight-chain molecule)

The straight-chain molecule making up the polyrotaxane is a molecule or substance that is threaded through the cyclic molecules and can be integrated in a non-covalent binding manner, and is not particularly limited as long as it is linear. The "straight-chain molecule" as used in the present application encompasses molecules including polymers and all other substances satisfying the foregoing requirements.

In the present application, "straight-chain" of the "straight-chain molecule" means that the molecule is substantially linear. In other words, the straight-chain molecule may have a branched chain if the cyclic molecules serving as rotators are rotatable or slidable on the straight-chain molecule. The length of the "straight chain" is not particularly limited as long as the cyclic molecules can slide or move on the straight-chain molecule.

Examples of the straight-chain molecule include hydrophilic polymers such as polyvinyl alcohol, polyvinylpyrrolidone, poly(meth)acrylic acid, cellulose resins (e.g., carboxymethyl cellulose, hydroxyethyl cellulose, hydroxypropyl cellulose), polyacrylamide, polyalkylene oxides (e.g., polyethylene glycol), polyvinyl acetal resin, polyvinyl methyl ether, polyamine, polyethylenimine, casein, gelatin, starch and/or copolymers thereof; and hydrophobic polymers, for example, polyolefin resins such as polyethylene, polypropylene, and other copolymer resins with olefin monomers, polyester resin, polyvinyl chloride resin, polystyrene resins such as polystyrene and acrylonitrile - styrene copolymer resin, acrylic resins such as polymethyl methacrylate, (meth)acrylic acid ester copolymer and acrylonitrile - methyl acrylate copolymer resin, polycarbonate resin, polyurethane resin, vinyl chloride - vinyl acetate copolymer resin, and polyvinyl butyral resin; and derivatives or modified forms thereof.

Among these, hydrophilic polymers are preferable because the haze value and the reflectance are kept at higher rates. Polyethylene glycol, polypropylene glycol, a polyethylene glycol - polypropylene glycol copolymer, polyisoprene, polyisobutylene, polybutadiene, polytetrahydrofuran, polydimethylsiloxane, polyethylene and polypropylene are more preferable, and polyethylene glycol, polyethylene glycol and a copolymer of polyethylene glycol and polypropylene glycol are even more preferable, and polyethylene glycol is particularly preferable.

The straight-chain molecule itself preferably has a high fracture strength. Although the fracture strength of the polyrotaxane-containing layer depends on other factors such as the bond strength between the block groups and the straight-chain molecule, the bond strength between the cyclic molecules and other ingredients of the surface coating layer, and the bond strength between the cyclic molecules, but a higher fracture strength can be provided if the straight-chain molecule itself has a high fracture strength.

The straight-chain molecule preferably has a molecular weight of 1,000 or more, for example, 1,000 to 1,000,000, preferably 5,000 or more, for example, 5,000 to 1,000,000 or 5,000 to 500,000, and more preferably 10,000 or more, for example, 10,000 to 1,000,000, 10,000 to 500,000 or 10,000 to 300,000.

The straight-chain molecule is preferably a biodegradable molecule in terms of environmental impact.

The straight-chain molecule preferably has a reactive group at each end thereof. Presence of the reactive group facilitates the reaction with the corresponding block group. The reactive group depends on the block group used and examples thereof include hydroxyl group, amino group, carboxyl group, thiol group and aldehyde group.

### (Cyclic molecule)

Any cyclic molecule may be used as the cyclic molecule making up the polyrotaxane as long as it is a cyclic molecule that can be threaded onto the straight-chain molecule.

The "cyclic molecule" as used in the present application encompasses a variety of cyclic substances including cyclic molecules. The "cyclic molecule" as used in the present application refers to a molecule or a substance which is substantially cyclic. To be more specific, the expression "substantially cyclic" implicates a ring which is not completely closed as in an alphabetical character "C" and also implicates the alphabetical character "C" having an overlapping spiral structure, one end of which is not connected to the other end.

Examples of the cyclic molecule include various cyclodextrins (e.g., α-cyclodextrin, β-cyclodextrin, γ-cyclodextrin, dimethyl cyclodextrin and glucosyl cyclodextrin, derivatives or modified forms thereof), crown ethers, benzocrowns, dibenzo-crowns, and dicyclohexano-crowns, and derivatives or modified forms thereof.

In the above-described cyclodextrins and crown ethers, openings of the cyclic molecules have different sizes depending on their type. Accordingly, the cyclic molecules to be used can be selected depending on the type of the straight-chain molecule to be used, more specifically assuming that the straight-chain molecule to be used has a cylindrical shape, depending on the diameter of the cross-section of the cylinder or on whether the straight-chain molecule is hydrophobic or hydrophilic. In a case where cyclic molecules each having a relatively large opening and a cylindrical straight-chain molecule having a relatively small diameter are used, two or more straight-chain molecules can also be threaded through the openings of the cyclic molecules. Among these, cyclodextrins (in particular α-cyclodextrin) are preferable in terms of environmental impact and the like.

In a case where a cyclodextrin is used for the cyclic molecules, assuming that the maximum inclusion amount is 1, the number of cyclic molecules which are threaded onto the straight-chain molecule (inclusion amount) is preferably 0.05 to 0.60, more preferably 0.10 to 0.50, and even more preferably 0.20 to 0.40.

In a case where cyclodextrins such as α-cyclodextrin are used for the cyclic molecules, the cyclodextrins preferably have at least one hydroxyl group substituted (modified) with a hydrophobic group for the reason that the film mirror has excellent stain-proof properties.

Specific examples of the hydrophobic group include an alkyl group, benzyl group, a benzene derivative-containing group, an acyl group, a silyl group, trityl group, a nitrate ester group, tosyl group, a fluorine atom-containing organic group and an unsaturated double bond group. Among these, an acyl group (particularly acetyl group) or a fluorine atom-containing organic group is preferable because of more excellent stain-proof properties of the film mirror. Specific examples of the unsaturated double bond group are the same as those of the unsaturated double bond group to be described later.

The fluorine atom-containing organic group is not particularly limited as long as it is a fluorine atom-containing monovalent organic group. It should be noted that the fluorine atom-containing organic group may contain a heteroatom (e.g., oxygen atom) other than fluorine atom.

The monovalent organic group is not particularly limited and specific examples thereof include aliphatic hydrocarbon groups (e.g., an alkyl group, an alkenyl group, and an alkynyl group), aromatic hydrocarbon groups (e.g., an aryl group), heterocyclic groups (e.g., an azole group, and a pyridyl group).

Because of more excellent stain-proof properties of the film mirror, the fluorine atom-containing organic group is preferably a group represented by formula (1) shown below.

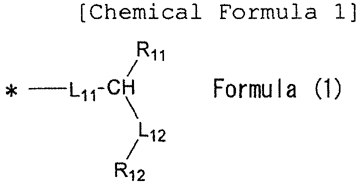

In formula (1) above, R₁₁ represents a fluorine atom-containing alkyl group, and specific examples thereof include fluoromethyl group, difluoromethyl group and trifluoromethyl group.

In formula (1) above, R₁₂ represents an optionally branched monovalent hydrocarbon group, and specific examples thereof include an alkyl group, an alkenyl group and an alkynyl group each containing 1 to 30 carbon atoms. Among these, an alkyl group containing 1 to 10 carbon atoms is preferable.

In formula (1) above, L₁₁ and L₁₂ each independently represent a single bond or a divalent linking group. Examples of the divalent linking group include optionally substituted divalent aliphatic hydrocarbon groups (preferably containing 1 to 8 carbon atoms; for example, alkylene groups such as methylene group, ethylene group and propylene group), optionally substituted divalent aromatic hydrocarbon groups (preferably containing 6 to 12 carbon atoms; for example, phenylene group), -O-, -S-, -SO₂-, -N(R)- (R: alkyl group), -CO-, -NH-, -COO-, - CONH-, and combination groups thereof (e.g., an alkyleneoxy group, an alkyleneoxycarbonyl group and an alkylenecarbonyloxy group). L₁₁ is preferably an alkylene group. L₁₂ is preferably a group represented by formula (2) shown below.

In formula (1) above, * represents a bonding position.

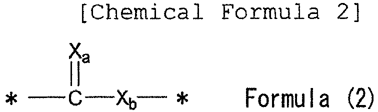

In formula (2) above, Xₐ and X_{b} each independently represent an oxygen atom or a sulfur atom.

In formula (2) above, * represents a bonding position.

Assuming here that the maximum number of hydroxyl groups of the cyclodextrin that may be modified is 1, the degree of modification using any of the hydrophobic groups is preferably 0.02 or more (up to 1), more preferably 0.04 or more, and even more preferably 0.06 or more.

The maximum number of hydroxyl groups of the cyclodextrin that may be modified is, in other words, a total number of hydroxyl groups included in the cyclodextrin before modification. The degree of modification is, in other words, a ratio of the number of modified hydroxyl groups to the total number of hydroxyl groups.

### (Block group)

Any group may be used as the block group making up the polyrotaxane as long as it is a group which holds the form in which the straight-chain molecule is threaded through the cyclic molecules in a skewer shape. Exemplary such groups include a bulky group and/or an ionic group. The "group" as used herein encompasses various groups including molecular groups and polymer groups. The ionicity of the ionic group and the ionicity of the cyclic molecules affect each other, for example, repel each other, whereby the form in which the straight-chain molecule is threaded through the cyclic molecules in a skewer shape can be held.

The block group may be a main chain or a side chain of a polymer if the skewer shape is held as described above. When the block group is Polymer A, the block group may be in the form in which Polymer A is a matrix and polyrotaxane is included in a part thereof, or be in the form in which polyrotaxane is a matrix and Polymer A is included in a part thereof. By thus combining with Polymer A having various characteristics, a composite material having the characteristics of the polyrotaxane and the characteristics of Polymer A in combination can be formed.

Specific examples of the block group include dinitrophenyl groups such as 2,4-dinitrophenyl group and 3,5-dinitrophenyl group, cyclodextrins, adamantane groups, trityl groups, fluoresceins, pyrenes, and derivatives or modified forms thereof.

The block group may be substituted (modified) with any of the foregoing hydrophobic groups.

### (Polyrotaxane synthesis method)

The polyrotaxane synthesis method is not particularly limited and polyrotaxanes can be synthesized by the methods described in JP 2810264 B and JP 3475252 B.

To be more specific, in a case where α-cyclodextrin is used for the cyclic molecules, polyethylene glycol is used for the straight-chain molecule, 2,4-dinitrophenyl group is used as the block group, acetyl group is used as the hydrophobic group, and acryloyl group is used as the unsaturated double bond group, synthesis can be performed, for example, as described below.

Both ends of the polyethylene glycol are modified with amino groups to obtain a polyethylene glycol derivative for the introduction of block groups to be performed later. The α-cyclodextrin and the polyethylene glycol derivative are mixed together to prepare pseudopolyrotaxane. In the preparation, assuming that the maximum inclusion amount is 1, the mixing time and the mixing temperature can be adjusted to, for example, 1 to 48 hours and 0°C to 100°C so that the inclusion amount lies in a range of 0.001 to 0.6 with respect to 1.

In general, up to 230 α-cyclodextrin molecules can be threaded onto the polyethylene glycol having an average molecular weight of 20,000. Therefore, this value is the maximum inclusion amount. This condition is one for allowing on average 60 to 65 (63) α-cyclodextrin molecules corresponding to a value of 0.26 to 0.29 (0.28) with respect to the maximum inclusion amount to be threaded onto the polyethylene glycol having an average molecular weight of 20,000. The inclusion amount of the α-cyclodextrin can be determined by NMR, optical absorption, elemental analysis or the like.

The resulting pseudopolyrotaxane is reacted with 2,4-dinitrofluorobenzene dissolved in DMF to obtain polyrotaxane having the block groups introduced therein.

Modification of the above-described cyclodextrins with hydrophobic groups may be performed on the synthesized polyrotaxanes or may be previously performed on the cyclodextrins before synthesizing the polyrotaxanes.

An exemplary modification method using acetyl group as a hydrophobic group includes a method in which acetic anhydride is used to modify hydroxyl group of cyclodextrin.

### (Preferred embodiments of polyrotaxane)

Because of excellent stain-proof properties of the film mirror, cyclic molecules of the polyrotaxane each preferably have at least one type of group selected from the group consisting of an acyl group (in particular acetyl group) and a fluorine atom-containing organic group, more preferably a fluorine atom-containing organic group, and even more preferably an acyl group (in particular acetyl group) and a fluorine atom-containing organic group.

The polyrotaxane content in the surface coating layer is preferably 5 wt% or more, more preferably 10 wt% or more, even more preferably 20 wt% or more, still more preferably 30 wt% or more, and most preferably 50 wt% or more for the reason that the haze value and the reflectance are kept at higher rates.

The content of the polyrotaxane having a fluorine atom-containing organic group in the surface coating layer is preferably 0.1 to 50 wt%, more preferably 0.5 wt% or more but less than 30 wt%, even more preferably 1 to 20 wt%, and most preferably 10 to 20 wt% for the reason that the haze value and the reflectance are kept at higher rates.

The polyrotaxane content can be determined by NMR (solution NMR or solid-state NMR), X-ray diffractometry described in JP 2010-261134 A or the like.

In a case where a polyrotaxane-containing composition for forming the surface coating layer in which each of cyclic molecules to be described later has at least one of a reactive group and a polymerizable group is used and cured to form the surface coating layer, the polyrotaxane content in the surface coating layer refers to a polyrotaxane content (wt%) with respect to the total solids in the composition used to form the surface coating layer.

Likewise, in the case where a polyrotaxane-containing composition for forming the surface coating layer in which each of cyclic molecules to be described later has at least one of a reactive group and a polymerizable group is used and cured to form the surface coating layer, the content of the polyrotaxane having a fluorine atom-containing organic group in the surface coating layer refers to a content (wt%) of the polyrotaxane having a fluorine atom-containing organic group with respect to the total solids in the composition used to form the surface coating layer.

### <Method of forming polyrotaxane-containing surface coating layer>

The method of forming the polyrotaxane-containing surface coating layer is not particularly limited and an exemplary method includes a method which involves applying a composition for forming the surface coating layer which contains polyrotaxane having a reactive group in its cyclic molecules and a solvent onto the metal reflective layer, the primer layer or the second resin substrate and subjecting the composition applied to form the resin layer to at least one of heating treatment and light irradiation to be cured, thereby forming the surface coating layer. After the heating treatment or light irradiation, a solvent may be suitably used to remove unreacted ingredients from the composition having undergone the heating treatment or the light irradiation.

The application method, the heating treatment method and the light irradiation method are the same as those for the above-described primer layer.

Specific examples of the reactive group are the same as those of the reactive group of the above-described straight-chain molecule. Among these, the reactive group is preferably hydroxyl group (in particular polycaprolactone group) or a polymerizable group, and more preferably a polymerizable group. Polycaprolactone group is a group represented by *-(CO-C₅H₁₀O)ₙ-H (*: bonding position, n: integer). Specific examples of the polymerizable group are the same as those in the above-described primer layer. Among these, the polymerizable group is preferably an unsaturated double bond group and more preferably acryloyl group or methacryloyl group.

As described above, the polyrotaxane included in the composition for forming the resin layer is preferably polyrotaxane having an unsaturated double bond group in each cyclic molecule.

For example, methods described below can be used to introduce an unsaturated double bond group in a cyclic molecule. That is, exemplary methods include a method which involves forming a carbamate bond using an isocyanate compound or the like; a method which involves forming an ester bond using a carboxylic compound, an acid chloride compound, an acid anhydride or the like; a method which involves forming a silyl ether bond using a silane compound or the like; and a method which involves forming a carbonate bond using a chlorocarbonate compound or the like.

In a case where (meth)acryloyl group is introduced as an unsaturated double bond group through a carbamoyl bond, the polyrotaxane is dissolved in a dehydration solvent such as DMSO or DMF and an isocyanate group-containing (meth)acryloylating agent is added to introduce the (meth)acryloyl group. In addition, in a case where an unsaturated double bond group is introduced through an ether bond or an ester bond, a (meth)acrylating agent having an active group such as glycidyl group or an acid chloride may also be used.

The step of substituting hydroxyl group of a cyclic molecule with an unsaturated double bond group may be performed before, during or after the step of preparing the pseudopolyrotaxane. The substitution step may be performed before, during or after the step of introducing block groups in the pseudopolyrotaxane to prepare the polyrotaxane. In addition, in a case where the polyrotaxane is one having a reactive group in each cyclic molecule, the substitution step may be performed before, during or after the step of reacting the polyrotaxane molecules with each other. The substitution step may also be performed in these two or more periods. The substitution step is preferably performed after the preparation of the polyrotaxane through introduction of the block groups in the pseudopolyrotaxane but before reacting the polyrotaxane molecules with each other. The conditions that may be used in the substitution step depend on the unsaturated double bond group with which the hydroxyl group is to be substituted but are not particularly limited and various reaction methods and reaction conditions can be used.

A polymerizable group-containing monomer may be added to the composition for forming the resin layer. In a case where the composition for forming the resin layer includes a polymerizable group-containing monomer, the polymerizable group-containing monomer as well as the polyrotaxane included in the composition for forming the resin layer is cured under the above-described heating treatment or light irradiation to form the surface coating layer.

Specific examples of the polymerizable group are the same as those in the above-described primer layer.

Examples of the polymerizable group-containing monomer include methacrylic acid esters of polyhydric alcohols [e.g., ethylene glycol di(meth)acrylate, butanediol di(meth)acrylate, hexanediol di(meth)acrylate, 1,4-cyclohexane diacrylate, pentaerythritol tetra(meth)acrylate, pentaerythritol tri(meth)acrylate, trimethylol propane tri(meth)acrylate, trimethylolethane tri(meth)acrylate, dipentaerythritol tetra(meth)acrylate, dipentaerythritol penta(meth)acrylate, dipentaerythritol hexa(meth)acrylate, pentaerythritol hexa(meth)acrylate, 1,2,3-cyclohexane tetramethacrylate, polyurethane polyacrylate, and polyester polyacrylate], ethylene oxide-modified products, polyethylene oxide-modified products and caprolactone-modified products of the foregoing esters, vinylbenzene and derivatives thereof [e.g., 1,4-divinylbenzene, 4-vinyl benzoic acid-2-acryloyl ethyl ester, 1,4-divinyl cyclohexanone]; vinyl sulfone (e.g., divinyl sulfone), acrylamide (e.g., methylenebisacrylamide) and methacrylamide. The monomers may be used in combination of two or more.

The solvent that may be used in the composition for forming the surface coating layer is not particularly limited and examples thereof include water; alcoholic solvents such as methanol, ethanol, propanol, ethylene glycol, glycerol and propylene glycol monomethyl ether; acids such as acetic acid; ketone solvents such as acetone, methyl ethyl ketone and cyclohexanone; amide solvents such as formamide, dimethylacetamide and N-methylpyrrolidone; nitrile solvents such as acetonitrile and propionitrile; ester solvents such as methyl acetate and ethyl acetate; carbonate solvents such as dimethyl carbonate and diethyl carbonate; and aromatic hydrocarbon solvents such as benzene, toluene and xylene. Other exemplary solvents include ether solvents, glycol solvents, amine solvents, thiol solvents and halogenated solvents.

Among these, amide solvents, ketone solvents, nitrile solvents, carbonate solvents, and aromatic hydrocarbon solvents are preferable and to be more specific, acetone, dimethylacetamide, methyl ethyl ketone, cyclohexanone, acetonitrile, propionitrile, N-methylpyrrolidone, dimethyl carbonate and toluene are preferable.

When curing the composition for forming the resin layer, a curing agent such as a polyisocyanate compound may be used.

Examples of the polyisocyanate compound include 2,4-tolylene diisocyanate, 2,6-tolylene diisocyanate, phenylene diisocyanate, xylene diisocyanate, diphenylmethane-4,4'-diisocyanate, naphthylene-1,5-diisocyanate, and hydrogenated compounds thereof; ethylene diisocyanate, propylene diisocyanate, tetramethylene diisocyanate, hexamethylene diisocyanate, isophorone diisocyanate, 1-methyl-2,4-diisocyanate cyclohexane, 1-methyl-2,6-diisocyanate cyclohexane, dicyclohexylmethane diisocyanate, and triphenylmethane triisocyanate.

When curing the composition for forming the resin layer, polymerization initiators such as a photo-radical polymerization initiator and a thermal radical polymerization initiator may be used.

Examples of the photo-radical polymerization initiator include acetophenones, benzoins, benzophenones (e.g., 1-hydroxy-1,2,3,4,5,6-hexahydrobenzophenone), phosphine oxides, ketals, anthraquinones, thioxanthones, azo compounds, peroxides, 2,3-dialkyldione compounds, disulfide compounds, fluoroamine compounds, aromatic sulfoniums, lophine dimers, onium salts, borate salts, active esters, active halogens, inorganic complexes and coumarins.

Examples of the thermal radical polymerization initiator that may be used include organic or inorganic peroxides and organic azo or diazo compounds.

The polyrotaxane content with respect to the total solids in the composition for forming the resin layer is preferably 5 wt% or more, more preferably 10 wt% or more, even more preferably 20 wt% or more, still more preferably 30 wt% or more, and most preferably 50 wt% or more for the reason that the haze value and the reflectance are kept at higher rates.

The content of the polyrotaxane having a fluorine atom-containing organic group with respect to the total solids in the composition for forming the resin layer is preferably 0.1 to 50 wt%, more preferably 0.5 wt% or more but less than 30 wt%, even more preferably 1 to 20 wt%, and most preferably 10 to 20 wt% for the reason that the film mirror has excellent stain-proof properties and more excellent resistance to sandy dust.

### <Primer layer>

As described above, each of the primer layers for use in the first and second embodiments (these layers are hereinafter collectively referred to also as "primer layers" if they do not need to be distinguished from each other) is an optional layer formed in terms of adhesion between any two layers of the above-described resin substrate, metal reflective layer and surface coating layer as well as the optional back coat layer, and particularly between the metal reflective layer (the second resin substrate in the second embodiment; this also applies to the paragraph of <Primer layer>) and the surface coating layer.

The material used to form the primer layers is not particularly limited as long as the material is capable of improving the adhesion between the metal reflective layer and the surface coating layer. Specific examples thereof include resin materials such as polyester resin, urethane resin, acrylic resin, urethane acrylic resin, polyamide resin, and cycloolefin polymer resin.

Among these, a hydrophilic group-containing resin is preferably used to form the primer layers because the adhesion between the metal reflective layer and the surface coating layer is further improved while suppressing cure shrinkage of the surface coating layer and improving the curling resistance. To be more specific, urethane acrylate; epoxy acrylate; polyester acrylate; and polyacrylate having hydrophilic groups such as hydroxyl group, carboxy group and amino group are more preferable.

In the practice of the invention, the thickness of the primer layers is not particularly limited and is preferably 0.1 to 50 µm and more preferably 1 to 30 µm.

In the practice of the invention, the method of forming the primer layers is not particularly limited, and for example in a case where urethane acrylic resin is used to form the primer layers, an exemplary method involves applying a mixed solution of urethane acrylate (e.g., EBECRYL8402 manufactured by Daicel-Cytec Co., Ltd.) and a photopolymerization initiator (e.g., Irgacure 184 manufactured by Ciba Specialty Chemicals) to the surface of the resin substrate and then photo-curing under exposure to ultraviolet radiation.

### <Back coat layer>

As described above, in terms of adjusting curling of the film mirror, each of the back coat layers for use in the first and second embodiments (these layers are hereinafter collectively referred to also as "back coat layers" if they do not need to be distinguished from each other) is an optional layer formed on a surface of the resin substrate (the second resin substrate in the second embodiment; this also applies to the paragraph of <Back coat layer>) on the side opposite to the side on which the surface coating layer is formed.

In the practice of the invention, the back coat layers preferably have a cure shrinkage of within ±30% with respect to the cure shrinkage in the surface coating layers for the reason that curling of the film mirror can be adjusted.

The material used to form the back coat layers as described above is not particularly limited and examples thereof include urethane resin and resins included in the above-described surface coating layers.

The back coat layers may contain an adhesive ingredient because the adhesion and the adhesiveness of the back coat layers to their adjoining materials (resin substrate and metal reflective layer) are good.

In the practice of the invention, the thickness of the back coat layers is not particularly limited and is preferably 0.5 to 50 µm and more preferably 1 to 30 µm.

In the practice of the invention, the method of forming the back coat layers is not particularly limited. For example, in a case where any of the above-described photocurable resins and thermosetting resins is used to form the back coat layers, an exemplary method includes a method which involves applying a curable composition containing any of these resins onto the back surface of the resin substrate and then photo-curing under exposure to ultraviolet radiation or heat-curing under heating.

### <Adhesion layer>

In the film mirror of the invention, an adhesion layer may optionally be provided between any two layers of the resin substrate, the metal reflective layer and the surface coating layer as well as the optional primer layer and back coat layer which have been described above.

The resin used as the binder in the adhesion layer is not particularly limited as long as the adhesion and the smoothness are satisfied. Specific examples thereof include polyester resin, acrylate resin, melamine resin, epoxy resin, polyamide resin, vinyl chloride resin, and vinyl chloride - vinyl acetate copolymer resin. These may be used alone or in combination of two or more.

Among these, acrylate resin and a mixed resin of polyester resin and melamine resin are preferable and thermosetting resins obtained by mixing a curing agent such as an isocyanate into the foregoing resins are more preferable in terms of weather resistance.

The adhesion layer preferably has a thickness of 0.01 to 5 µm and more preferably 0.1 to 2 µm in terms of adhesion, smoothness, reflectance and the like.

Conventionally known coating methods such as gravure coating, reverse coating, die coating, blade coating, roll coating, air knife coating, screen coating, bar coating and curtain coating can be used to form the adhesion layer.

### [Composite film]

The composite film according to the invention is a composite film including a resin substrate and a surface coating layer, wherein the surface coating layer has a hardness of up to 100 N/mm² and an elastic recovery rate of 60% or more.

The resin substrate and the surface coating layer in the composite film of the invention is the same as those explained in the above-described film mirror of the invention, and the above-described primer layer and adhesion layer may be optionally provided between these layers, and the above-described back coat layer may further be optionally provided on the back surface of the resin substrate.

Such a composite film can be suitably used as the second resin substrate and the surface coating layer in the film mirror of the invention and particularly in the film mirror according to the second embodiment. In other words, a separately prepared laminate including a resin substrate (first resin substrate) and a metal reflective layer and a composite film of the invention can be stacked on top of each other to obtain a film mirror of the invention.

### EXAMPLES

The present invention is described below more specifically by way of examples. However, the present invention should not be construed as being limited to these examples.

### (Synthesis Example 1: Crosslinkable Polyrotaxane A)

Into a 100 mL conical flask were charged 4 g of polyethylene glycol (average molecular weight: 20,000) and 20 mL of dry methylene chloride to dissolve the polyethylene glycol. To this solution was added 0.8 g of 1,1-carbonyldiimidazole under an argon atmosphere and the mixture was subsequently reacted with stirring under an argon atmosphere at room temperature (20°C) for 6 hours.

The thus obtained reactant was poured into 300 mL of diethyl ether which was stirred at high speed. The solution was allowed to stand for 10 minutes and the solution containing precipitate was centrifuged at 10,000 rpm for 5 minutes. The precipitate was collected and dried under vacuum at 40°C for 3 hours.

The resulting product was dissolved in 20 mL of methylene chloride. This solution was added dropwise to 10 mL of ethylenediamine over 3 hours. After the dropwise addition, the mixture was stirred for 40 minutes. The resulting reactant was put in a rotary evaporator to remove the methylene chloride, and then dissolved in 50 mL of water, put into a dialysis tube (molecular weight cut-off: 8,000) and dialyzed in water for 3 days. The resulting dialysate was dried in the rotary evaporator, and the dried product was further dissolved in 20 mL of methylene chloride and reprecipitated with 180 mL of diethyl ether. The precipitate-containing solution was centrifuged at 100,000 rpm for 5 minutes and dried under vacuum at 40°C for 2 hours to obtain 2.83 g of polyethylene glycol bis(amine) (number-average molecular weight: 20,000).

To 150 mL of water were added 4.5 g of the polyethylene glycol bis(amine) and 18.0 g of α-cyclodextrin and the mixture was heated to 80°C for dissolution. The solution was cooled and allowed to stand at 5°C for 16 hours. The thus produced white precipitate in paste form was collected and dried.

The dried product was added to a mixed solution of 12.0 g of 2,4-dinitrofluorobenzene and 50 g of dimethylformamide and the mixture was stirred at room temperature for 5 hours. To the reaction mixture was added 200 mL of dimethyl sulfoxide (DMSO) for dissolution and the solution was then poured into 3,750 mL of water to collect deposits. The deposits were redissolved in 250 mL of DMSO and then poured again into 3,500 mL of 0.1% sodium chloride solution to collect the deposits. The deposits were washed with water and methanol each three times and then dried under vacuum at 50°C for 12 hours to obtain 2.0 g of polyrotaxane in which the polyethylene glycol bis(amine) is threaded through the α-cyclodextrin in a skewer shape and 2,4-dinitrophenyl groups are attached to amino groups at both ends. The resulting polyrotaxane is called Polyrotaxane a1.

The resulting Polyrotaxane a1 was subjected to ultraviolet absorption measurement and ¹H-NMR measurement to calculate the inclusion amount of the α-cyclodextrin. The inclusion amount was 72.

To be more specific, in the ultraviolet absorption measurement, the molar absorption coefficient of each of the synthesized inclusion compound and 2,4-dinitroaniline at 360 nm was measured to calculate the inclusion amount of the cyclodextrin. In the ¹H-NMR measurement, the inclusion amount was calculated from the integration ratio between hydrogen atoms in the polyethylene glycol moiety and hydrogen atoms in the cyclodextrin moiety.

Polyrotaxane a1 (1 g) was dissolved in 50 g of an 8% solution of lithium chloride in N,N-dimethylacetamide. To the solution were added 6.7 g of acetic anhydride, 5.2 g of pyridine and 100 mg of N,N-dimethylaminopyridine and the mixture was stirred overnight at room temperature. The reaction solution was poured into methanol and solid deposits were separated by centrifugation. The separated solid was dried and then dissolved in acetone. The solution was poured into water and the solid deposits were separated by centrifugation and dried to obtain polyrotaxane (1.2 g) in which a part of hydroxyl groups of the cyclodextrin were modified with acetyl groups. The resulting polyrotaxane is called Polyrotaxane a2.

Polyrotaxane a2 was subjected to ¹H-NMR measurement. The calculated introduction amount (degree of modification) of the acetyl groups was 75%.

Polyrotaxane a2 (1 g) was dissolved in 50 g of an 8% solution of lithium chloride in N,N-dimethylacetamide. To the solution were added 5.9 g of acryloyl chloride, 5.2 g of pyridine and 100 mg of N,N-dimethylaminopyridine and the mixture was stirred over two nights at room temperature. The reaction solution was poured into methanol and solid deposits were separated by centrifugation. The separated solid was dried and then dissolved in acetone. The solution was poured into water and the solid deposits were separated by centrifugation and dried to obtain polyrotaxane (0.8 g) in which hydroxyl groups of the cyclodextrin were modified with acryloyl groups and acetyl groups. The resulting polyrotaxane is called Crosslinkable Polyrotaxane A.

Crosslinkable Polyrotaxane A was subjected to ¹H-NMR measurement. The calculated introduction amount (degree of modification) of the acryloyl groups and the acetyl groups was 87%. In short, the introduction amount (degree of modification) of the acryloyl groups is 12%.

### <Example 1>

A photocurable urethane acrylate-containing coating liquid (UV Self-Healing; Natoco Co., Ltd.) [OC-1] was applied onto a resin substrate [PMMA film with a thickness of 75 µm; Technolloy S001G manufactured by Sumitomo Chemical Co., Ltd.] by an applicator and dried at 80°C for 5 minutes. The coating liquid was then cured by exposure to ultraviolet radiation under a condition of 300 mJ/cm² to form a surface coating layer with a thickness of about 15 µm, thereby preparing a composite film.

### <Example 2>

A mixed solution (OC-2) of liquids A to C described in paragraphs [0142] and [0143] of JP 2012-25821 A was applied onto a resin substrate [PMMA film with a thickness of 75 µm; Technolloy S001G manufactured by Sumitomo Chemical Co., Ltd.] by an applicator, heated at 90°C for 4 hours and then aged overnight at room temperature to form a surface coating layer with a thickness of about 15 µm, thereby preparing a composite film.

### <Example 3>

A 2-propanol solution (solid content: about 35 wt%) [OC-3] containing 99 parts by weight of urethane (meth)acrylate resin (UV-1700B manufactured by Nippon Synthetic Chemical Industry Co., Ltd.) and 1 part by weight of a photopolymerization initiator (Irgacure 184 manufactured by BASF) was applied onto a resin substrate [PMMA film with a thickness of 75 µm; Technolloy S001G manufactured by Sumitomo Chemical Co., Ltd.] by an applicator and dried at 80°C for 5 minutes. The coating solution was then cured by exposure to ultraviolet radiation to form a surface coating layer with a thickness of about 12 µm, thereby preparing a composite film.

### <Example 4>

The method of Example 3 was repeated except that application was made so as to obtain a surface coating layer with a thickness of 5.0 µm, thereby preparing a composite film.

### <Example 5>

A 2-propanol solution (solid content: about 20 wt%) [OC-4] containing Crosslinkable Polyrotaxane A described above (100 parts by weight) and 2 parts by weight of a photopolymerization initiator (Irgacure 184 manufactured by BASF) was applied onto a resin substrate [PMMA film with a thickness of 75 µm; Technolloy S001G manufactured by Sumitomo Chemical Co., Ltd.] by an applicator and dried at 80°C for 5 minutes. The coating solution was then cured by exposure to ultraviolet radiation to form a surface coating layer with a thickness of about 15 µm, thereby preparing a composite film.

In OC-4, the content of Crosslinkable Polyrotaxane A with respect to the total solids is 98 wt%.

### <Example 6>

A 2-propanol solution (solid content: about 20 wt%) [OC-5] containing Crosslinkable Polyrotaxane A described above (20 parts by weight), 80 parts by weight of SHIKOH UV-1700B (urethane acrylate manufactured by The Nippon Synthetic Chemical Industry Co., Ltd.) and 2 parts by weight of a photopolymerization initiator (Irgacure 184 manufactured by BASF) was applied onto a resin substrate [PMMA film with a thickness of 75 µm; Technolloy S001G manufactured by Sumitomo Chemical Co., Ltd.] by an applicator and dried at 80°C for 5 minutes. The coating solution was then cured by exposure to ultraviolet radiation to form a surface coating layer with a thickness of about 15 µm, thereby preparing a composite film.

In OC-5, the content of Crosslinkable Polyrotaxane A with respect to the total solids is 20 wt%.

### <Example 7>

A 2-propanol solution (solid content: about 20 wt%) [OC-6] containing Crosslinkable Polyrotaxane A described above (8 parts by weight), 92 parts by weight of SHIKOH UV-1700B (urethane acrylate manufactured by The Nippon Synthetic Chemical Industry Co., Ltd.) and 2 parts by weight of a photopolymerization initiator (Irgacure 184 manufactured by BASF) was applied onto a resin substrate [PMMA film with a thickness of 75 µm; Technolloy S001G manufactured by Sumitomo Chemical Co., Ltd.] by an applicator and dried at 80°C for 5 minutes. The coating solution was then cured by exposure to ultraviolet radiation to form a surface coating layer with a thickness of about 15 µm, thereby preparing a composite film.

In OC-6, the content of Crosslinkable Polyrotaxane A with respect to the total solids is 8 wt%.

### <Example 8>

A 2-propanol solution (solid content: about 20 wt%) [OC-7] containing Crosslinkable Polyrotaxane A described above (5 parts by weight), 95 parts by weight of SHIKOH UV-1700B (urethane acrylate manufactured by The Nippon Synthetic Chemical Industry Co., Ltd.) and 2 parts by weight of a photopolymerization initiator (Irgacure 184 manufactured by BASF) was applied onto a resin substrate [PMMA film with a thickness of 75 µm; Technolloy S001G manufactured by Sumitomo Chemical Co., Ltd.] by an applicator and dried at 80°C for 5 minutes. The coating solution was then cured by exposure to ultraviolet radiation to form a surface coating layer with a thickness of about 15 µm, thereby preparing a composite film.

In OC-7, the content of Crosslinkable Polyrotaxane A with respect to the total solids is 5 wt%.

### <Example 9>

A 2-propanol solution (solid content: about 20 wt%) [OC-8] containing Crosslinkable Polyrotaxane A described above (0.2 part by weight), 99.8 parts by weight of SHIKOH UV-1700B (urethane acrylate manufactured by The Nippon Synthetic Chemical Industry Co., Ltd.) and 2 parts by weight of a photopolymerization initiator (Irgacure 184 manufactured by BASF) was applied onto a resin substrate [PMMA film with a thickness of 75 µm; Technolloy S001G manufactured by Sumitomo Chemical Co., Ltd.] by an applicator and dried at 80°C for 5 minutes. The coating solution was then cured by exposure to ultraviolet radiation to form a surface coating layer with a thickness of about 15 µm, thereby preparing a composite film.

In OC-8, the content of Crosslinkable Polyrotaxane A with respect to the total solids is 0.2 wt%.

### <Example 10>

The method of Example 8 was repeated except that the SHIKOH UV-1700B (urethane acrylate manufactured by The Nippon Synthetic Chemical Industry Co., Ltd.) (95 parts by weight) was replaced by SHIKOH UV7600-B (urethane acrylate manufactured by The Nippon Synthetic Chemical Industry Co., Ltd.) (95 parts by weight), thereby preparing a composite film.

The type of the composition for forming the surface coating layer as used in Example 10 is called OC-9. In OC-9, the content of Crosslinkable Polyrotaxane A with respect to the total solids is 5 wt%.

### <Example 11>

A coating liquid [OC-10] containing 66.6 parts by weight of a thermosetting urethane resin (Self-Healing Clear (registered trademark) No. 100 manufactured by Natoco Co., Ltd.) and 33.4 parts by weight of a curing agent No. 100 (Natoco Co., Ltd.) was applied onto a resin substrate [PMMA film with a thickness of 75 µm; Technolloy S001G manufactured by Sumitomo Chemical Co., Ltd.] by an applicator and heated at 90°C for 20 minutes to form a surface coating layer with a thickness of about 15 µm, thereby preparing a composite film.

### <Comparative Example 1>

A mixed solution (OC-11) of the liquids A to C described in paragraphs [0142] and [0143] of JP 2012-25821 A was applied onto a resin substrate [PMMA film with a thickness of 75 µm; Technolloy S001G manufactured by Sumitomo Chemical Co., Ltd.] by an applicator, heated at 90°C for 4 hours and then aged overnight at room temperature to form a surface coating layer with a thickness of about 15 µm, thereby preparing a composite film.

### <Comparative Example 2>

A mixed solution (OC-12) of the liquids A to C described in paragraphs [0142] and [0143] of JP 2012-25821 A was applied onto a resin substrate [PMMA film with a thickness of 75 µm; Technolloy S001G manufactured by Sumitomo Chemical Co., Ltd.] by an applicator, heated at 90°C for 4 hours and then aged overnight at room temperature to form a surface coating layer with a thickness of about 15 µm, thereby preparing a composite film.

### <Comparative Example 3>

A surface coating layer was not formed but only a resin substrate was used as a film.

Since the film is only composed of the resin substrate, the thickness of the surface coating layer and the evaluation of the curling resistance in Table 1 are indicated by hyphens (-).

### <Comparative Example 4>

A solution of PMMA (S000 manufactured by Mitsubishi Chemical Corporation) in ethyl acetate was applied onto a resin substrate [PET film with a thickness of 100 µm; A4300 manufactured by Toyobo Co., Ltd.] and dried at 80°C for 5 minutes to form a protective layer with a thickness of about 15 µ.

### <Comparative Example 5>

The method of Example 8 was repeated except that the SHIKOH UV1700-B (urethane acrylate manufactured by The Nippon Synthetic Chemical Industry Co., Ltd.) (95 parts by weight) was replaced by SHIKOH UV7605-B (urethane acrylate manufactured by The Nippon Synthetic Chemical Industry Co., Ltd.) (95 parts by weight), thereby preparing a composite film.

The type of the composition for forming the surface coating layer as used in Comparative Example 5 is called OC-13. In OC-12, the content of Crosslinkable Polyrotaxane A with respect to the total solids is 5 wt%.

Each of the prepared composite films was evaluated for the surface hardness and the elastic recovery rate of the surface coating layer, the haze value, the reflectance, the coefficient of dynamic friction, the curling resistance and the stain-proof properties according to the methods described below and the results are shown in Table 1 below.

### (1) Surface hardness and elastic recovery rate

The surface hardness (Martens hardness) of the surface coating layer was measured with an ultra-microhardness tester (DUH-201S manufactured by Shimadzu Corporation).

The maximum indentation depth (hmax) and the indentation depth after load removal (after 10 seconds) (hf) of an indenter pressed into a sample at room temperature under conditions of a load of 1 mN and 10 seconds were measured and the elastic recovery amount (hmax - hf) was calculated as the difference between these values and the elastic recovery rate was calculated from (hmax - hf) / hmax.

The surface as used in the surface hardness and the elastic recovery rate refers to a portion to a measurement depth of about 10 nm.

### (2) Haze ratio

For each of the composite films before and after the sand blasting test as described below, the haze ratio (%) under C illuminant was measured with a haze meter (Nippon Denshoku Industries Co., Ltd.).

### (Sand blasting test)

The sand blasting test was performed according to the "wear testing method by means of sand blasting" specified in JIS H 8503:1989.

More specifically, each of the prepared composite films was cut into a size of 3 cm square and fixed so that alumina particles collide at an angle of 45°. Then, 200 g of alumina particles were made to fall freely from a height of 100 cm to collide against the composite film.

### (3) Reflectance

A mirror film having a silver-containing reflective layer formed by electroless plating and electroplating on a surface of a PET substrate was prepared.

Then, each of the prepared composite films was stacked on a surface of the reflective layer of the mirror film and laminated by thermocompression bonding under conditions of 120°C and a load of 0.5 Pa to prepare a film mirror having a structure shown in FIG. 5.

The reflectance of each film mirror prepared was measured with a spectrophotometer (UV-3100PC manufactured by Shimadzu Corporation).

The reflectance after the sand blasting test described in (2) above had been performed was also measured in the same manner and the amount of reduction of the reflectance at 450 nm between before and after the sand blasting test (= initial reflectance - reflectance after sand blasting test) was further calculated to evaluate the reflectance based on the following criteria:
AA: The amount of reflectance reduction is less than 1.0%;
A: The amount of reflectance reduction is 1.0% or more but less than 2.0%;
B: The amount of reflectance reduction is 2.0% or more but less than 3.0%;
C: The amount of reflectance reduction is 3.0% or more.

### (4) Coefficient of dynamic friction

The coefficient of dynamic friction was calculated according to the testing method for the coefficient of friction described in JIS K 7125:1999.

More specifically, a 200 g weight was used in a room adjusted to 23°C and a humidity of 50% and the coefficient of dynamic friction was calculated from the resistance value obtained when it was pulled at a rate of 100 mm/min.

### (5) Curling resistance

Each of the composite films was cut into a size of 100 mm square and put on a smooth surface, and the height from the point of contact between the film and the smooth surface to upwardly curved portions of the film at its four corners was measured.

As a result, a composite film having an average height to the upwardly curved portions at the four corners of less than 5 mm was deemed to have extremely excellent curling resistance and was rated "AA," a composite film having an average height of 5 mm or more but less than 10 mm was deemed to have excellent curling resistance and was rated "A," and a composite film having an average height of 10 mm or more was deemed to have poor curling resistance and was rated "B."

### (6) Stain-proof properties

The surface of the coating layer was evaluated for the marker repellency. A sample having repellency was deemed to have excellent stain-proof properties and was rated "A," and a sample having no repellency was deemed to have poor stain-proof properties and was rated "B."

**<Table 1>**

| Table 1 | | | | | | | | | | | | | | | | | |
|---|---|---|---|---|---|---|---|---|---|---|---|---|---|---|---|---|---|
| | | Example | | | | | | | | | | | Comparative Example | | | | |
| | | 1 | 2 | 3 | 4 | 5 | 6 | 7 | 8 | 9 | 10 | 11 | 1 | 2 | 3 | 4 | 5 |
| Resin substrate | | S001G | S001G | S001G | S001G | S001G | S001G | S001G | S001G | S001G | S001G | S001G | S001G | S001G | S001G | PET | S001G |
| Surface coating layer | Type | 0C-1 | 0C-2 | 0C-3 | OC-3 | 0C-4 | OC-5 | 0C-6 | 0C-7 | 0C-8 | OC-9 | OC-10 | 0C-11 | 0C-12 | None | S000 | OC-13 |
| | Thickness (*µ*m) | 15 | 15 | 12 | 5 | 15 | 15 | 15 | 15 | 15 | 15 | 15 | 15 | 15 | - | 15 | 15 |
| Surface hardness (N/mm²) | | 2.3 | 2.5 | 57.7 | 57.8 | 2. 1 | 46.5 | 58.3 | 65.7 | 78.6 | 72. 1 | 1.1 | 72.5 | 121.5 5 | 22.0 | 21.5 | 78.2 |
| Elastic recovery rate (%) | | 88. 1 | 66.2 | 62.6 | 60. 1 | 92 | 73 | 68. 1 | 62.0 | 60.5 | 67.5 | 65.0 | 32.6 | 60.2 | 36.8 | 34.5 | 42.9 |
| Haze ratio (%) | Initial | 1. 53 | 1.51 | 1.56 | 1.54 | 1.58 | 1.60 | 1.62 | 1. 59 | 1.62 | 1.60 | 1.54 | 1. 78 | 1.66 | 2.12 | 1.96 | 1.61 |
| | After sand blasting test | 1.94 | 1.88 | 5.57 | 6. 19 | 1.69 | 1.71 | 1.80 | 1.83 | 1.84 | 1. 82 | 1.90 | 9.42 | 11.7 | 39. 1 | 38.8 | 12.7 |
| Reflectance (%) | Initial | 83.2 | 82.6 | 82. 1 | 82. 5 | 82.9 | 83.3 | 82.9 | 83.2 | 83.3 | 83.2 | 83.0 | 83. | 82.7 | 79.4 | 78.8 | 83.3 |
| | After sand blasting test | 82.7 | 81.7 | 80.2 | 79.6 | 82.0 | 82.1 | 81. 1 | 81.2 | 80. 1 | 80.6 | 81.2 | 78.8 | 79.5 | 56.2 | 54.6 | 79. 1 |
| | Amont of reduction (evaluation) | AA | AA | A | B | AA | A | A | B | B | B | A | C | C | C | C | C |
| Coefficient of dynamic friction | | 0. 15 | 0. 17 | 0.26 | 0.26 | 0.31 | 0.27 | 0. 26 | 0.25 | 0.28 | 0.27 | 0.16 | 0.1 | 0.11 | 0.21 | 0.22 | 0.23 |
| Curling resistance | | A | AA | A | A | A | A | A | A | B | B | AA | A | A | - | A | B |
| Stain-proof properties | | A | A | B | B | B | B | B | B | B | B | A | A | A | B | B | B |

The results shown in Table 1 revealed that in the composite films prepared in Comparative Examples 1 to 5 which did not satisfy one of the hardness (up to 100 N/mm²) and the elastic recovery rate (60% or more) of the surface coating layer, the haze ratio after the sand blasting test was high and the amount of reduction of the reflectance of the film mirror formed therefrom after the sand blasting test was also large.

In contrast, it was revealed that in the composite films prepared in Examples 1 to 11 which satisfied the hardness (up to 100 N/mm²) and the elastic recovery rate (60% or more) of the surface coating layer, the haze ratio after the sand blasting test was low and the amount of reduction of the reflectance of the film mirror formed therefrom after the sand blasting test was also small, which showed excellent scratch resistance.

Comparisons between Examples 1 to 3 revealed that in the composite films prepared in Examples 1 to 2 which used the surface coating layers each having a lower surface hardness (having higher flexibility) and a lower coefficient of dynamic friction (having higher smoothness), the haze ratio after the sand blasting test was extremely low and the amount of reduction of the reflectance of the film mirror formed therefrom after the sand blasting test was also extremely small, which showed more excellent scratch resistance.

Comparisons between Examples 1 to 4 and Example 5 revealed that use of the urethane bond-containing resin in the surface coating layer reduced the coefficient of dynamic friction.

### DESCRIPTION OF SYMBOLS

- 1: film mirror
- 2: resin substrate
- 3: metal reflective layer
- 4: surface coating layer
- 5: primer layer
- 6: back coat layer
- 10: film mirror
- 11: first resin substrate
- 12: metal reflective layer
- 13: second resin substrate
- 14: surface coating layer
- 15: primer layer
- 16: back coat layer

## Claims

1. A film mirror comprising: a resin substrate; a metal reflective layer; and a surface coating layer,
wherein the surface coating layer has a hardness of up to 100 N/mm² and an elastic recovery rate of 60% or more.

2. The film mirror according to claim 1, wherein a resin making up the surface coating layer is a urethane bond-containing resin.

3. The film mirror according to claim 2, wherein the urethane bond-containing resin is a urethane (meth)acrylate resin.

4. The film mirror according to claim 3, wherein the urethane (meth)acrylate resin is a hydroxyl group-containing acrylic resin / isocyanate polymer.

5. A film mirror comprising: a first resin substrate; a metal reflective layer; a second resin substrate; and a surface coating layer,
wherein the surface coating layer has a hardness of up to 100 N/mm² and an elastic recovery rate of 60% or more.

6. The film mirror according to claim 5, wherein a resin making up the surface coating layer is a urethane bond-containing resin.

7. The film mirror according to claim 6, wherein the urethane bond-containing resin is a urethane (meth)acrylate resin.

8. The film mirror according to claim 7, wherein the urethane (meth)acrylate resin is a hydroxyl group-containing acrylic resin / isocyanate polymer.

9. The film mirror according to any one of claims 1 to 8 for use in concentration of sunlight.

10. A composite film comprising: a resin substrate and a surface coating layer,
wherein the surface coating layer has a hardness of up to 100 N/mm² and an elastic recovery rate of 60% or more.

11. The composite film according to claim 10, wherein a resin making up the surface coating layer is a urethane bond-containing resin.

12. The composite film according to claim 11, wherein the urethane bond-containing resin is a urethane (meth)acrylate resin.

13. The composite film according to claim 12, wherein the urethane (meth)acrylate resin is a hydroxyl group-containing acrylic resin / isocyanate polymer.
